# EUROPEAN PATENT APPLICATION

(11) **EP 1 688 660 A1**
(43) Date of publication of application: **09.08.2006**
(21) Application number: 04798224.4
(22) Date of filing: 08.11.2004
(51) Int. Cl.: F17C 7/04, B60P 3/22

(54) **MOBILE LNG/CNG SUPPLY STATION**

(30) Priority: 26.11.2003 ES 200302774
(71) Applicant: ROS ROCA INDOX EQUIPOS E INGENIERIA, S.L., 25300 Tarrega (ES)
(72) Inventor: ROCA ENRICH, Ramon, c/o ROS ROCA, S.A., E-25300 Tarrega (Lleida) (ES)
(74) Representative: Aragones Forner, Rafael Angel
(86) International application number: PCT/ES2004/000497
(87) International publication number: WO 2005/052439

(57) **Abstract**

The mobile station of the invention consists in a mobile device being formed by a tank truck comprising the actual tank-container, an LNG transfer tank, a high-pressure pump allowing to obtain the CNG from the LNG, a set of several high-pressure cylinders, a high-pressure vaporiser being fit to vaporise the LNG by heating it up to the ambient temperature in order to thus be in a position to have it supplied to a CNG tank, flowmeters both for CNG and LNG, and a control panel using PLC technology and thus being fir to in an automatic and safe manner carry out the gas refuelling operations by means of a fluid circulation and control circuit and/or electric-electronic signals between said components.

## Description

### OBJECT OF THE INVENTION

The present invention has as its object a mobile LNG/CNG supply station.

### FIELD OF THE INVENTION

The mobile station being the object of the present invention allows to carry out an LNG supply at any geographic location being located at a far distance from the terminals of the big ducts and from the coastal harbours being provided with end stations for the reception and supply of the gas.

### BACKGROUND OF THE INVENTION

In many countries the infrastructures or the orography are such as to bring about an enormous cost increase when it comes to having an ample availability of refuelling end stations, mobile devices like that of the present invention being fit to obviate the aforementioned drawbacks since they allow to carry out an LNG supply at any geographic location.

Technology is at present seeking to achieve the propulsion of vehicles by means of natural gas because of the fact that the petrol fuel reserves are becoming more and more scarce and their duration has a limited lifetime.

Because of all this renewed attempts are being made all the time in order to be in a position to use natural gas as the driving fuel for motor vehicles because this latter has a number of advantages from among which can be cited the low CO₂ and pollution elements level as compared with the conventional vehicles, the absence of sulphide-derived pollutants, the low noise level of the motors, the low motor maintenance level, and the long motor lifetime, as well as the fact of its being a cheaper alternative as compared with other ecological energy sources, its having an elevated ignition temperature and being lighter than air, and its not being toxic, although it can asphyxiate when displacing the air.

The use of LNG is increasing more and more in all countries, especially in the most developed ones, and this involves an execution of infrastructures for the gas in all of them, regardless of the country's geographic situation, orographic configuration, etc., as well as the need to establish very costly connections with the supply systems of other countries. In those countries having a coast big terminals are arranged at the coast for receiving the LNG, this latter being regasified and thus fed to the gas supply system, or else being transported in tank trucks to small regasification plants, tank truck fleets having to be used for such a purpose.

All this involves the need to achieve the necessary availability of LNG/CNG stations as per the percentage of vehicles employing natural gas, and of LNG tank trucks being available for supplying the end stations. In many cases it is difficult to coordinate the development of the elements being necessary for said implementation with the expected growth of the numbers of vehicles that will use natural gas.

In this technology the process of obtaining CNG from LNG is a relatively simple one since it consists in compressing the LNG by means of a high-pressure pump unit (reaching a pressure of 300 bar, for example) in order to later on gasify it in an ambient vaporiser.

### SUMMARY OF THE INVENTION

There are a great number of mobile stations allowing to carry the gas from the central end stations being located inland or at the coast to the supply stations being located at a far distance. Said mobile stations have been nevertheless presenting some drawbacks so far due to the makeup of the actual tank truck and of the accessories being needed for carrying out the fuelling/refuelling operations with the corresponding gas both at the end stations and the (small) satellite stations.

The present invention has as its object a mobile LNG/CNG supply station having a robust makeup allowing to carry out the reception, transportation and supply of the gas in question in a fully safe manner, as well as to carry out said operations with the maximum control and with the best means and the most advanced technology thereby obviating the drawbacks having been so far had with the known mobile stations

According to what has been set forth above the mobile LNG/CNG supply station being the object of the present invention is essentially characterised in that it consists in a mobile device being formed by a tank truck being provided with a number of components for the supply of LNG and CNG, said components comprising at least the actual tank-container being made of stainless steel at the inside and of carbon steel at the outside, an LNG transfer tank being made up of a stainless steel liner and a carbon steel jacket, said LNG transfer tank being fit to maintain the LNG in those conditions allowing to carry out the gas refuelling operation, a high-pressure pump allowing to obtain the CNG from the LNG, a set of several high-pressure cylinders, a high-pressure vaporiser being fit to vaporise the LNG by heating it up to the ambient temperature in order to thus be in a position to have it supplied to a CNG tank, flowmeters (both for CNG and LNG), and a control panel using PLC technology and thus being fit to in an automatic and safe manner carry out the gas refuelling operations; in combination with a fluid circulation and control circuit and/or electric-electronic signals between said components wherein the actual tank-container is connected to the LNG transfer tank by means of pipes being provided with the corresponding valves, to the high-pressure pump through pipes being provided with valves, and to the control panel by means of electric connections being provided with temperature, pressure and level transmitters; the high-pressure cylinders are connected by means of the corresponding pipe to the LNG tank being provided with a pressure regulator and a relief valve, to the high-pressure vaporiser and to the flowmeter for the coupling of CNG by means of a coalescer filter and the corresponding valves and pressure and temperature transmitters; the LNG transfer tank is connected as said through pipes to the flowmeter for the coupling of LNG and to the control panel directly by means of the corresponding temperature transmitters and through the flowmeter; the high-pressure pump is connected to the actual tank-container by means of pipes in the manner having been indicated above, to the high-pressure vaporiser by means of pipes being provided with a temperature transmitter, and to the control panel by means of temperature transmitters; the flowmeters for the coupling of CNG and LNG are connected to the control panel by means of connections being provided with temperature and pressure transmitters; and the control panel receives and transmits the signals for the control and operation.

These and other features will be best made apparent by the accompanying two sheets of drawings showing a preferred embodiment of the mobile station of he invention, said preferred embodiment being represented only by way of an example not limiting the scope of the invention.

### DESCRIPTION OF THE DRAWINGS

In the drawings:
Fig. 1 is a perspective view of the tank truck of the mobile station of the present invention.
Fig. 2 illustrates a diagram of the object circuit of the mobile station.

### DETAILED DESCRIPTION OF A PREFERRED EMBODIMENT

According to the drawings the mobile LNG/CNG supply station being the object of the present invention consists in a mobile device being formed by a tank truck being generally designated at -1- (see Fig. 1) and the whole circuit being generally designated at -2- (see Fig. 2) and thus being shown in a diagrammed view.

The mobile device making up the station of the invention is provided with a number of components for the supply of LNG and CNG, said components on the one hand comprising the actual tank-container being designated at -3- (see Fig. 1) and being made of stainless steel at the inside and of carbon steel at the outside, an LNG transfer tank -4- being made up of a stainless steel liner and a carbon steel jacket, said LNG transfer tank being fit to maintain the LNG in those conditions allowing to carry out the gas refuelling operation, a high-pressure pump -5- allowing to obtain the CNG from the LNG, a set of several high-pressure cylinders -6-, a high-pressure vaporiser -7- being fit to vaporise the LNG by heating it up to the ambient temperature in order to thus be in a position to have it supplied to a CNG tank, flowmeters (both for CNG -8- and LNG -9-), and a control panel -10- using PLC technology and thus being fit to in an automatic and safe manner carry out the gas refuelling operations.

All of the components are connected as per the fluid circulation and control circuit -C- and/or electric-electronic signals between said components wherein the actual tank-container -3- is connected to the LNG transfer tank -4- by means of pipes -T1- being provided with the corresponding valves -V1-, to the high-pressure pump -5- through pipes -T2- being provided with valves - V2-, and to the control panel -10- by means of electric connections -E- being provided with temperature, pressure and level transmitters -TT-, -PT-, LT-; the high-pressure cylinders -6- are connected by means of the corresponding pipe -T3- to the LNG tank being provided with a pressure regulator -RP- and a relief valve -VA-, to the high-pressure vaporiser -7- and to the flowmeter -9- for the coupling of CNG -11- by means of a coalescer filter -FC- and the corresponding valves -VV- and pressure and temperature transmitters -PT-, -TT-; the LNG transfer tank -4- is connected as said through pipes -T4- to the flowmeter -8- for the coupling of LNG -12- and to the control panel -10- directly by means of the corresponding temperature transmitters -TT- and through the flowmeter; the high-pressure pump -5- is connected to the actual tank-container -3- by means of pipes -T2- in the manner having been indicated above, to the high-pressure vaporiser -7- by means of pipes being provided with a temperature transmitter -TT-, and to the control panel - 10- by means of temperature transmitters -TT-; the flowmeters -9/8- for the coupling of CNG and LNG are connected to the control panel -10- by means of connections -CE- being provided with temperature and pressure transmitters -TT-, -PT-; and the control panel - 10- receives and transmits the signals for the control and operation.

## Claims

1. A mobile LNG/CNG supply station of the type comprising a tank truck being fit to carry out fuelling and ulterior refuelling operations between a main end station and a satellite or secondary station thereby connecting any geographic location to be supplied from any of the main terminals being located inland or at the coast; **characterised in that** it consists in a mobile device being formed by a tank truck (1) being provided with a number of components for the supply of LNG and CNG, said components comprising at least the actual tank-container (3) being made of stainless steel at the inside and of carbon steel at the outside, an LNG transfer tank (4) being made up of a stainless steel liner and a carbon steel jacket, said LNG transfer tank being fit to maintain the LNG in those conditions allowing to carry out the gas refuelling operation, a high-pressure pump (5) allowing to obtain the CNG from the LNG, a set of several high-pressure cylinders (6), a high-pressure vaporiser (7) being fit to vaporise the LNG by heating it up to the ambient temperature in order to thus be in a position to have it supplied to a CNG tank, flowmeters (8, 9) (both for CNG and LNG), and a control panel (10) using PLC technology and thus being fit to in an automatic and safe manner carry out the gas refuelling operations; in combination with a fluid circulation and control circuit (C) and/or electric-electronic signals between said components wherein the actual tank-container (3) is connected to the LNG transfer tank (4) by means of pipes (T1) being provided with the corresponding valves (V1), to the high-pressure pump (5) through pipes (T2) being provided with valves (V2), and to the control panel (10) by means of electric connections (E) being provided with temperature, pressure and level transmitters (TT, PT, LT); the high-pressure cylinders (6) are connected by means of the corresponding pipe (T3) to the LNG tank being provided with a pressure regulator (RP) and a relief valve (VA), to the high-pressure vaporiser (7) and to the flowmeter (9) for the coupling of CNG (11) by means of a coalescer filter (FC) and the corresponding valves and pressure and temperature transmitters (PT, TT); the LNG transfer tank (4) is connected as said through pipes (T4) to the flowmeter (8) for the coupling of LNG (12) and to the control panel (10) directly by means of the corresponding temperature transmitters (TT) and through the flowmeter; the high-pressure pump (5) is connected to the actual tank-container (3) by means of pipes (T2) in the manner having been indicated above, to the high-pressure vaporiser (7) by means of pipes being provided with a temperature transmitter (TT), and to the control panel (10) by means of temperature transmitters (TT); the flowmeters (9/8) for the coupling of CNG and LNG are connected to the control panel (10) by means of connections (CE) being provided with temperature and pressure transmitters (TT, PT); and the control panel (10) receives and transmits the signals for the control and operation.
